# FASCICULE DE BREVET EUROPEEN

(11) **EP 0 499 549 B1**
(45) Date de publication et mention de la délivrance du brevet: **03.05.1995**
(21) Numéro de dépôt: 92400402.1
(22) Date de dépôt: 14.02.1992
(51) Int. Cl.: B60K 37/00, G01D 11/26

(54) **Combiné perfectionné pour tableaux de bord de véhicules automobiles**
Armaturenbrett für Kraftfahrzeuge
Dashboard for automotive vehicles

(30) Priorité: 15.02.1991 FR 9101832
(43) Date de publication de la demande: 19.08.1992
(73) Titulaire: JAEGER, F-92303 Levallois-Perret (FR)
(72) Inventeur: Guirauton, Pascal, F-95370 Montigny Les Cormeilles (FR); Renner, Pierre, F-93800 Epinay/Seine (FR)
(74) Mandataire: Martin, Jean-Jacques

(56) Documents cités:
- DE-A- 2 754 808
- DE-A- 2 927 392
- US-A- 1 782 405

## Description

La présente invention concerne le domaine des combinés pour tableaux de bord de véhicules automobiles.

On appelle généralement "combinés" pour tableaux de bord de véhicules automobiles, les ensembles supportant les témoins lumineux et divers indicateurs mis à la disposition du conducteur.

On a déjà proposé de nombreux combinés de tableaux de bord pour véhicules automobiles.

Ceux-ci comprennent généralement :
- un boîtier susceptible de supporter divers accessoires, par exemple des lampes formant témoins indicateurs,
- une pièce d'habillage dénommée réhaut fixée sur l'avant du boîtier et formée généralement d'une jupe périphérique munie d'un voile en porte-à-faux sur sa surface interne, et
- une pièce optique généralement plane et transparente intercalée entre le boîtier et le voile en porte-à-faux du réhaut.

Cette pièce optique est formée généralement d'une pièce transparente en matière plastique servant de guide de lumière pour éclairer par exemple des aiguilles de mouvements indicateurs constitués, tels qu'un logomètre, et divers écrans ou symboles, en particulier des symboles associés aux mouvements précités.

Ladite pièce optique doit être plaquée et maintenue étroitement contre le réhaut, d'une part pour éviter toute fuite de lumière en périphérie de la pièce optique et, d'autre part pour éviter toute vibration de celle-ci.

On a proposé de fixer la pièce optique par collage sur le réhaut ou sur le boîtier.

Toutefois, cette disposition ne donne pas totalement satisfaction compte-tenu des dilatations thermiques différentielles mises en jeu.

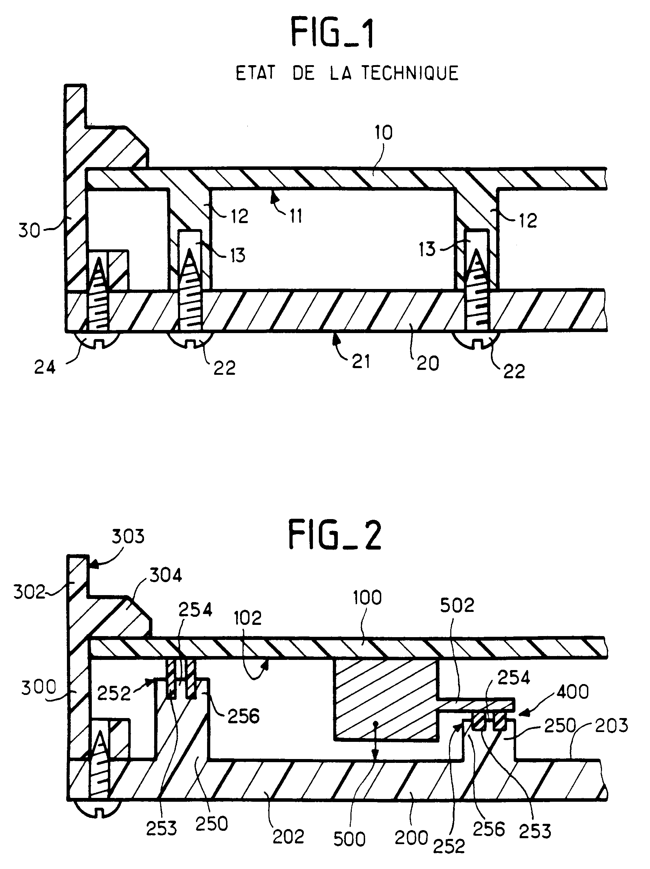

Comme représenté sur la figure 1, on a également proposé de fixer la pièce optique 10 sur le boîtier 20 à l'aide de piliers 12 venus de moulage sur la face arrière 11 de la pièce optique. Ces piliers 12 sont munis d'alésages borgnes 13 à leur extrémité arrière. La pièce optique 10 est ainsi fixée sur le boîtier 29 à l'aide de vis 22 dont le corps traverse le boîtier 20 et sont engagés dans les alésages 13, tandis que la tête des vis 22 repose contre la face arrière 21 du boîtier.

En parallèle, le réhaut 30 est fixé sur le boîtier 20 à l'aide de vis similaires 24.

La technique connue représentée sur la figure 1 ne donne pas non plus totalement satisfaction compte-tenu de l'empilement de cotes imposées entre les différentes pièces composant le combiné.

Le document US-A-1782405 décrit un tableau de bord pour véhicule automobile comprenant un boitier comportant une jupe périphérique munie d'un voile en porte-à-faux sur sa surface interne, une première plaque fixée à l'aide de vis sur le voile en porte-à-faux, laquelle première plaque est pourvue d'orifices recevant des appareils indicateurs, une seconde plaque fixée à l'aide de vis sur la première pour maintenir les appareils indicateurs, une troisième plaque transparente servant de couverture qui repose sur le bord avant de la jupe périphérique du boîtier, une pièce annulaire fixée par vis sur la surface extérieure de la jupe périphérique du boîtier et qui est adaptée pour maintenir la troisième plaque et une garniture annulaire élastique placée à l'intérieur du boîtier entre la seconde et la troisième plaque.

Le document DE-2754808 concerne un tachygraphe comportant un anneau élastique pour supporter la face avant transparente.

Le but de la présente invention est de proposer de nouveaux moyens permettant de fixer la pièce optique des combinés.

Ce but est atteint selon la présente invention grâce aux caractéristiques mentionnees en revendication 1 annexée
Selon une autre caractéristique avantageuse de la présente invention, les piliers sont venus de moulage avec le boîtier.

Selon une autre caractéristique avantageuse de la présente invention, les moyens élastiques sont formés de cylindres en matériau élastique engagés sur des doigts formés à l'extrémité avant des piliers.

Selon une autre caractéristique avantageuse de présente invention, les moyens élastiques sont formés de cylindres en matériau élastique engagés entre un doigt central et une jupe périphérique prevus sur l'extrémité avant des piliers.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 précédemment décrite représente, selon une vue en coupe partielle, un combiné conforme à l'état de la technique, et
- la figure 2 représente une vue schématique partielle et en coupe similaire d'un combiné conforme à la présente invention.

On aperçoit sur la figure 2 annexée, la représentation schématique d'un combiné conforme à la présente invention comprenant, une pièce optique 100, un boîtier 200 et une pièce d'habillage ou réhaut 300.

Comme indiqué précédemment, la pièce optique 100 est formée de préférence d'une plaque en matière plastique transparente. La pièce optique 100 est destinée à servir de guide de lumière pour l'éclairage de divers accessoires, par exemple des aiguilles de mouvement (indicateur de vitesse et compte-tours) et/ou de différents symboles indicateurs. Le cas échéant, la pièce optique peut être associée a un écran. L'écran n'a pas été représenté sur la figure 2 pour simplifier l'illustration. L'écran est pourvu de différents symboles. Il s'agit par exemple d'un écran formé par sérigraphie. De tels écrans sérigraphiés sont bien connus du spécialiste des combinés pour tableaux de bord de véhicules automobiles et ne seront donc pas décrits plus en détail par la suite.

Le cas échéant, la pièce optique 100 peut supporter elle-même les mouvements indicateurs, tels que l'indicateur de vitesse et le compte-tours. Par ailleurs, la pièce optique 100 peut être munie sur sa face arrière 102 de structures à effet de prisme participant à l'éclairage.

Le boîtier 200 peut faire l'objet de nombreuses variantes de réalisation. De préférence, le boîtier 200 est formé par moulage d'une pièce en matière plastique.

Pour l'essentiel, le boîtier 200 comprend avantageusement une plaque de base arrière 202 généralement plane et parallèle à la pièce optique 100, munie sur sa face avant 203 d'une pluralité de toiles perpendiculaires. De telles toiles peuvent par exemple définir une pluralité de cheminées recevant chacune une lampe formant témoin indicateur.

La pièce d'habillage ou réhaut 300 peut également faire l'objet de nombreuses variantes de réalisation. Elle est de préférence réalisée d'une pièce en matière plastique.

Pour l'essentiel, le réhaut 300 comprend une jupe périphérique 302 conçue pour entourer le boîtier, et un voile 304 en porte-à-faux sur la surface interne 303 de la jupe 302.

Le réhaut 300 peut être fixé sur la plaque de base 202 du boîtier selon toute technique classique appropriée, de préférence à l'aide de vis telle que la vis référencée 224 sur la figure 2.

On notera que selon la caractéristique essentielle de la présente invention, il est prévu des moyens élastiques 400 entre la pièce optique 100 et le boîtier 200.

Plus précisément, selon la présente invention, la plaque de base 202 du boîtier 200 est munie sur sa face avant 203 d'une pluralité de piliers 250. Les piliers 250 s'étendent perpendiculairement à la plaque de base 202. Les piliers 250 peuvent faire l'objet de diverses variantes. Ils présentent de préférence une section droite circulaire.

Les moyens élastiques 400 sont intercalés entre la face arrière 102 de la pièce optique 100 et l'extrémité avant 252 des piliers 250.

Plus précisément encore, selon la présente invention, les moyens élastiques 400 sont formés de tubes cylindriques en matériau élastique, de préférence en matériau élastomère.

Les tubes cylindriques élastiques 400 sont engagés dans des chambres annulaires 253 définies à l'extrémité avant 252 des piliers 250. Ces chambres annulaires 253 sont définies entre un doigt central 254 et une jupe périphérique 256, venus de moulage à l'extrémité avant des piliers 250.

L'engagement des tubes cylindriques élastiques 400 dans les chambres annulaires définies entre les doigts centraux 254 et les jupes périphériques 256 permet de garantir une bonne sollicitation sur la pièce optique 100 en limitant les déformations latérales des tubes cylindriques 400.

Bien entendu, la longueur des cylindres élastiques 400 doit être supérieure à la profondeur des chambres annulaires 253 de sorte que, comme représenté sur la figure 2, les tubes cylindriques 400 émergent largement à l'extérieur des chambres 253.

Selon un mode de réalisation donné à titre d'exemple non limitatif, les cylindres élastiques 400 sont réalisés en caoutchouc élastomère, ils présentent une longueur de 10mm, un diamètre externe de 5mm et un diamètre interne de 3mm, soit une épaisseur de paroi de l'ordre du mm. Par ailleurs, selon un mode de réalisation donné à titre d'exemple non limitatif, la profondeur des chambres annulaires 253 est de l'ordre de 7mm, de sorte que les tubes cylindriques élastiques 400 émergent d'environ 3mm au-delà des chambres 253.

Bien entendu la présente invention n'est pas limitée au mode de réalisation particulier qui vient d'être décrit mais s'étend à toutes variantes conformes à son esprit.

Ainsi par exemple comme cela est représenté sur la figure 2, un mouvement 500 ou plus généralement un agrégat (une montre par exemple) peut être intercalé entre le guide de lumière 100 et les moyens élastiques 400. Dans ce cas, l'appui du fond de boîte 202 sur le guide de lumière 100 ne se fait plus directement mais par l'intermédiaire de l'élément 500. L'élément 500 peut être fixé rigidement au guide de lumière 100. Selon la figure 2, les moyens élastiques 400 reposent sur une patte 502 solidaire de l'élément 500.

## Revendications

1. Combiné pour tableaux de bord de véhicules automobiles comprenant:
- un boîtier (200),
- une pièce optique (100) généralement plane et transparente placée en avant du boîtier (200),
- une pièce (300) fixée sur l'avant du boîtier et adaptée pour maintenir la pièce optique (100) en avant du boîtier (200) et
- des moyens élastiques (400) prévus entre le boîtier (200) et la pièce optique (100),
caractérisé par le fait que:
- la pièce optique (100) forme un guide de lumière pour l'éclairage de divers accessoires,
- la pièce (300) fixée sur l'avant du boitier constitue une pièce d'habillage qui rehausse le boîtier (200) sur l'avant et comprend une jupe périphérique (302) pourvue sur sa surface interne (303) d'un voile en porte-à-faux (304) qui sert d'appui à la face avant de la pièce optique (100),
- il est prévu plusieurs piliers (250) en saillie sur la face avant du boîtier (200),
- les moyens élastiques (400) sont formés de plusieurs organes séparés en nombre égal au nombre de piliers (250), prévus respectivement sur chaque pilier (250) pour solliciter la pièce optique (100) contre le voile en porte-à-faux (304) de la pièce d'habillage (300), de sorte que ladite pièce optique (100) est maintenue uniquement par la sollicitation des moyens élastiques (400).

2. Combiné selon la revendication 1, caractérisé par le fait que les piliers (250) sont venus de moulage avec le boîtier (200).

3. Combiné selon l'une des revendications 1 ou 2, caractérisé par le fait que les moyens élastiques comprennent des tubes cylindriques en matériau élastique (400) engagés sur des doigts (254) prévus à l'extrémité avant (252) des piliers (250).

4. Combiné selon l'une des revendications 1 à 3, caractérisé par le fait que les moyens élastiques comprennent des tubes cylindriques en matériau élastique (400) engagés entre un doigt central (254) et une jupe périphérique (256) prévue sur l'extrémité avant des piliers.

5. Combiné selon la revendication 4, caractérisé par le fait que la longueur des tubes cylindriques en matériau élastique (400) est supérieure à la profondeur des chambres annulaires (253) formées entre les doigts centraux (254) et les jupes (256).

6. Combiné selon l'une des revendications 1 à 5, caractérisé par le fait que les moyens élastiques (400) sont formés d'élastomère.

7. Combiné selon l'une des revendications 1 à 6, caractérisé par le fait qu'un mouvement ou agrégat (500) est intercalé entre certains moyens élastiques (400) et la pièce optique (100).

8. Combiné selon la revendication 7, caractérisé par le fait que les moyens élastiques (400) reposent sur une patte (502) solidaire du mouvement (500).

9. Combiné selon l'une des revendications 7 ou 8, caractérisé par le fait que le mouvement est fixé sur la pièce optique (100).

## Claims

1. A display unit for a motor vehicle dashboard, the display unit comprising:
a housing (200);
an optical part (100) that is generally plane and transparent placed in front of the housing (200);
a part (300) fixed on the front of the housing and adapted to hold the optical part (100) in front of the housing (200); and
resilient means (400) provided between the housing (200) and the optical part (100);
the unit being characterized by the fact that:
the optical part (100) forms a light waveguide for illuminating various accessories;
the part (300) fixed on the front of the housing constitutes a piece of trim that raises the front of the housing (200) and that comprises a peripheral skirt (302) provided on its inside surface (303) with an inwardly-directed projection (304) which serves as a bearing surface for the front face of the optical part (100);
a plurality of pillars (250) are provided projecting from the front face of the housing (200); and
the resilient means (400) are made up of a plurality of separate members that are equal in number to the number of pillars (250), being respectively provided on each pillar (250) to urge the optical part (100) against the inwardly-directed projection (304) of the piece of trim (300), such that said optical part is secured solely by the action of the resilient means (400).

2. A unit according to claim 1, characterized by the fact that the pillars (250) are integrally molded with the housing (200).

3. A unit according to claim 1 or 2, characterized by the fact that the resilient means comprise cylindrical tubes of resilient material (400) engaged on fingers (254) provided at the front ends (252) of the pillars (250).

4. A unit according to any one of claims 1 to 3, characterized by the fact that the resilient means comprise cylindrical tubes of resilient material (400) engaged between a respective central finger (254) and a respective peripheral skirt (256) provided on the front ends of the pillars.

5. A unit according to claim 4, characterized by the fact that the length of the cylindrical tubes of resilient material (400) is greater than the depth of the annular chambers (253) formed between the central fingers (254) and the skirts (256).

6. A unit according to any one of claims 1 to 5, characterized by the fact that the resilient means (400) are made of elastomer.

7. A unit according to any one of claims 1 to 6, characterized by the fact that a movement or a collection of parts (500) is interposed between some of the resilient means (400) and the optical part (100).

8. A unit according to claim 7, characterized by the fact that the resilient means (400) rest against a tab (502) secured to the movement (500).

9. A unit according to claim 7 or 8, characterized by the fact that the movement is fixed to the optical part (100).

## Patentansprüche

1. Anordnung für Kraftfahrzeug-Armaturenbretter mit:
- einem Gehäuse (200),
- einem allgemein flachen und durchsichtigen optischen Teil (100), welches vor dem Gehäuse (200) angeordnet ist,
- einem Teil (300), welches vorne am Gehäuse befestigt ist und zum Halten des optischen Teiles (100) vor dem Gehäuse (200) ausgebildet ist, und
- elastischen Mitteln (400), welche zwischen dem Gehäuse (200) und dem optischen Teil (100) vorgesehen sind,
dadurch **gekennzeichnet**, daß:
- das optische Teil (100) einen Lichtleiter zur Beleuchtung verschiedener Zubehörteile bildet,
- das vorne am Gehäuse befestigte Teil (300) ein Verkleidungsteil darstellt, welches das Gehäuse (200) nach vorne erhöht und einen Umfangskragen (302) hat, welcher auf seiner inneren Oberfläche (303) mit einem Vorsprung (304) versehen ist, welcher der Vorderseite des optischen Teiles (100) zur Anlage dient,
- mehrere Stützen (250) vorgesehen sind, welche von der Vorderseite des Gehäuses (200) abstehen,
- die elastischen Mittel (400) von mehreren gesonderten Organen gebildet sind, deren Anzahl gleich der Anzahl der Stützen (250) ist, und jeweils auf jeder Stütze (250) vorgesehen sind, um das optische Teil (100) so gegen den Vorsprung (304) des Verkleidungsteiles (300) zu drücken derart, daß das optische Teil (100) nur durch den Druck der elastischen Mittel (400) gehalten ist.

2. Anordnung nach Anspruch 1, dadurch **gekennzeichnet**, daß die Stützen (250) gemeinsam mit dem Gehäuse (200) gegossen sind.

3. Anordnung nach einem der Ansprüche 1 oder 2, dadurch **gekennzeichnet**, daß die elastischen Mittel zylindrische Hülsen aus elastischem Material (400) umfassen, die auf Finger (254) gesteckt sind, welche an den vorderen, äußersten Enden (252) der Stützen (250) vorgesehen sind.

4. Anordnung nach einem der Ansprüche 1 bis 3, dadurch **gekennzeichnet**, daß die elastischen Mittel zylindrische Hülsen aus elastischem Material (400) umfassen, die zwischen einen mittigen Finger (254) und einen Umfangskragen (256) eingefügt sind, welcher auf dem vorderen, äußersten Ende der Stützen vorgesehen ist.

5. Anordnung nach Anspruch 4, dadurch **gekennzeichnet**, daß die Länge der zylindrischen Hülsen aus elastischem Material (400) größer als die Tiefe von Ringkammern (253) ist, welche zwischen den mittleren Fingern (254) und den Kragen (256) gebildet sind.

6. Anordnung nach einem der Ansprüche 1 bis 5, dadurch **gekennzeichnet**, daß die elastischen Mittel (400) aus Elastomer gebildet sind.

7. Anordnung nach einem der Ansprüche 1 bis 6, dadurch **gekennzeichnet**, daß ein Triebwerk oder Aggregat (500) zwischen bestimmte elastische Mittel (400) und das optische Teil (100) zwischengefügt ist.

8. Anordnung nach Anspruch 7, dadurch **gekennzeichnet**, daß die elastischen Mittel (400) auf einer mit dem Triebwerk (500) einstückigen Lasche (502) aufliegen.

9. Anordnung nach einem der Ansprüche 7 oder 8, dadurch **gekennzeichnet**, daß das Triebwerk an dem optischen Teil (100) befestigt ist.
